# EUROPEAN PATENT SPECIFICATION

(11) **EP 1 636 995 B1**
(45) Date of publication and mention of the grant of the patent: **02.06.2010**
(21) Application number: 04776922.9
(22) Date of filing: 23.06.2004
(51) Int. Cl.: H04N 7/26, G10L 19/00

(54) **ENCODING METHOD AND APPARATUS FOR INSERTION OF WATERMARKS IN A COMPRESSED VIDEO BITSTREAM**
CODIERUNGSVERFAHREN UND -VORRICHTUNG ZUM EINFÜGEN VON WASSERZEICHEN IN EINEN KOMPRIMIERTEN VIDEOBITSTROM
PROCEDE DE CODAGE ET DISPOSITIF D'INSERTION DE FILIGRANES DANS UN FLUX BINAIRE VIDEO COMPRESSE

(30) Priority: 25.06.2003 US 482302 P
(43) Date of publication of application: 22.03.2006
(73) Proprietor: Thomson Licensing, 92443 Issy-les-Moulineaux Cedex (FR)
(72) Inventor: BOYCE, Jill, MacDonald, Manalapan, New Jersey 07726 (US); GIRELLINI, Daniel, Richard, New Brunswick, NJ 08901 (US); YIN, Peng, West Windsow, NJ 08550 (US)
(74) Representative: Rumpler, Wolfgang
(86) International application number: PCT/US2004/020030
(87) International publication number: WO 2005/004494

(56) References cited:
- WO-A-01/67671
- US-A1- 2001 003 553
- US-B1- 6 430 301

## Description

### CROSS-REFERENCE TO RELATED APPLICATION

This application claims the benefit of U.S. Provisional Application Serial No. 60/482,302 (Attorney Docket No. PU030163), filed June 25, 2003 and entitled "METHOD AND APPARATUS FOR INSERTION AND DETECTION OF FINGERPRINTS 1N A COMPRESSED VIDEO BITSTREAM".

### FIELD OF THE INVENTION

The present invention is directed towards video encoders and decoders, and more particularly, towards an apparatus and method for watermark insertion and/or detection.

### BACKGROUND OF THE INVENTION

It is often desirable to be able to identify the source of compressed video bitstreams, such as, for example, to identify the unauthorized distributors of copyrighted material. The encoder used to create a bitstream can be uniquely identified by insertion of a fingerprint (or watermark) during the encoding process. Ideally, the watermark insertion process should be of low additional computational complexity, and the watermark should be visually undetectable and have a very low impact on coding efficiency.

Numerous techniques have been proposed for inserting invisible robust and/or fragile watermarks into compressed images and video. One class of techniques generates a watermark signal in the Discrete Cosine Transform (DCT), wavelet or other transform domains, based on Human Visual System (HVS) sensitivity to frequency response.

Some systems operate on quantized DCT transform coefficients of JPEG or MPEG compressed images/video, where the Least Significant Bit (LSB) of certain transform coefficients is adjusted to match the parity of a watermark signal bit.

Accordingly, there Is a need for an encoder and decoder with low additional computational complexity for insertion and detection of substantially visually undetectable watermarks.

WO 01/67671 A2 discloses a system for data embedding in digital telephone signals. As one aspect of this system , the voice signal content is represented as a set of function coefficients. The data bits are embedded using a technique of modifying the least-significant bit of some selected coefficients.

U.S. Patent No. 6,4430,301 discloses the Formation and Analysis of Signals with Common and Transaction Watermarks. According to one aspect of the disclosure, the method for embedding watermarks in a host signal includes forming watermarked copies of the host signal with at least one different transaction watermark and at least one common watermark. Hypothesis transaction codes are used to determine correspondence between symbols of the watermark.

U.S. Patent Publication No. 2001/0003553 discloses a Signal Recording/Reproducing Method and Apparatus, Signal Record Medium and Signal. The disclosure provides for the addition of an identification signal to video and/or audio signals. The identification signal is inserted into the video and/or audio signal as an ancillary signal.

### SUMMARY OF THE INVENTION

These and other drawbacks and disadvantages of the prior art are addressed by an apparatus and method for insertion and detection of substantially visually undetectable watermarks.

In accordance with the principles of the present invention, an encoder for watermarking video content is disclosed; the encoder including a quantization unit for quantizing coefficients of the video bitstream, and an embedding unit in signal communication with the quantization unit for embedding bits of the digital fingerprint in blocks of the video bitstream as a function of the parity of the number of coded coefficients in the block

These and other aspects, features and advantages of the present invention will become apparent from the following description of exemplary embodiments, which is to be read in connection with the accompanying drawings.

### BRIEF DESCRIPTION OF THE DRAWINGS

The present invention may be better understood in accordance with the following exemplary figures, in which:
Figure 1 shows a flowchart for a block encoder;
Figure 2 shows a flowchart for a block encoder with fingerprint insertion in accordance with the principles of the present invention;
Figure 3 shows a flowchart for a block encoder with forced fingerprint insertion in accordance with the principles of the present invention;
Figure 4 shows a flowchart for a block encoder with required fingerprint Insertion in accordance with the principles of the present invention;
Figure 5 shows a flowchart for a block decoder with fingerprint detection in accordance with the principles of the present invention;
Figure 6 shows a block diagram for a video encoder having a block encoder for fingerprint insertion in accordance with the principles of the present invention; and
Figure 7 shows a block diagram for a video decoder having a block decoder for fingerprint detection in accordance with the principles of the present invention.

### DETAILED DESCRIPTION OF PREFERRED EMBODIMENTS

Embodiments of the present invention provide a method and apparatus with low additional computational complexity for insertion and detection of substantially visually undetectable watermarks. In the description that follows, an encoder and decoder may be collectively referred to as a CODEC for purposes of simplicity, although method and apparatus embodiments may be capable of only encoding, only decoding, or both encoding and decoding. Like elements may be indicated by like reference numerals having figure-specific digits in the hundreds position of the various figures. The terms "watermark" and "fingerprint" are used interchangeably herein.

Popular video compression standards, such as MPEG-2, MPEG-4, and JVT contain intra-coded I frames, and inter-coded P and B frames. Random access points in compressed video bitstreams may be made possible by grouping pictures into Groups of Pictures (GOPs) in MPEG-2, or Independent Decoder Refresh periods (IDRs). In these standards, the coded pictures are divided into non-overlapping blocks. Each block is transformed, using a Discrete Cosine Transform (DCT) or similar transformation, quantized, and run-length coded, such that only the non-zero quantized coefficients are coded. The quantization process may be uniform or nonuniform, and may employ dead-zones and/or thresholding. For example, the JVT JM reference software employs a threshold by which if the number of non-zero coefficients after a first stage of a quantization process is less than a threshold value, T, a second stage of the quantization process is applied to force all coefficients in the block to be quantized to zero.

The present description illustrates the principles of the invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means that can provide those functionalities as equivalent to those shown herein.

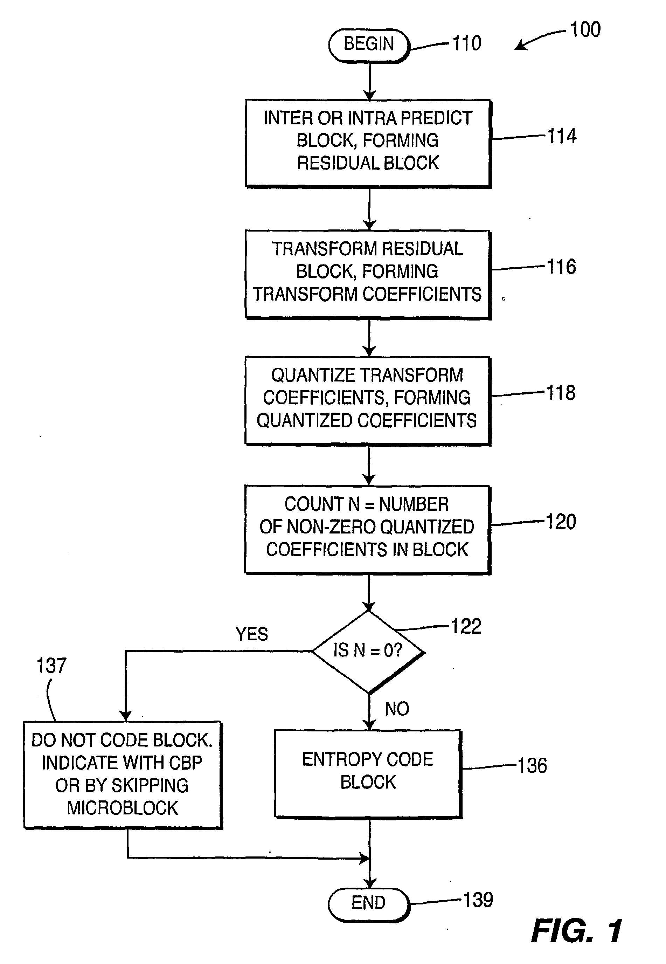

As shown in Figure 1, a block encoder is indicated generally by the reference numeral 100. The block encoder 100 includes a begin block 110 that passes control to function block 114. The function block 114 predicts a block using Intra or Inter prediction, forming a residual block, and passes control to a function block 116. The function block 116, in turn, transforms the residual block, forming transform coefficients, and passes control to a function block 118. The function block 118 quantizes the transform coefficients, forming quantized coefficients, and passes control to a function block 120. The function block 120, in turn, initializes a variable N to the number of non-zero quantized coefficients in the block, and passes control to a decision block 122. The decision block 122 checks whether N is zero, and if N is not zero, passes control to a function block 136 which entropy codes the block, and then passes control to an end block 139. If, however, N is equal to zero, the decision block 122 passes control to a function block 137, which does not code the block and either indicates the non-coded block with a coded block pattern (CBP) or by skipping the macroblock. The function block 137, in turn, passes control to the end block 139.

Thus, Figure 1 shows a flowchart of the block encoding process for a block-based video encoder. An inter or intra prediction is formed for the block, and subtracted from the block to form a residual block. For an inter prediction, motion compensation is generally used. Intra prediction is done differently for different coding standards, but always uses information from neighboring blocks or macroblocks in the same coded picture. The residual block is then transformed, using a block transform, to form transform coefficients. The transform coefficients are quantized, to form quantized coefficients. The number of quantized coefficients whose values are non-zero, N, are counted. If N is equal to zero, the block is not coded. If other blocks in the same macroblock are coded, the non-coding of the block is indicated using a coded block pattern (CBP). If all blocks in the same macroblock are not coded, the macroblock is skipped. If the block is to be coded, the non-zero coefficients are entropy coded using runlength coding.

Embodiments of the present invention provide a low-complexity method of inserting and detecting a unique fingerprint in compressed video streams. A method for insertion and detection of a fragile digital fingerprint (or watermark) in a compressed video bitstream is described, in order to be able to identify the encoder used to create the compressed video bitstream. The method is particularly well suited to inclusion in an MPEG AVC/ ITU H.264 bitstream. One bit of a unique identification code (fingerprint) is embedded into a coded block in the bitstream by matching the parity of the number of coded coefficients in the block to the bit value of the code.

This embodiment allows a unique fingerprint to be embedded into a compressed video bitstream by a video compression encoder, during the encoding process. A unique fingerprint sequence, FSEQ, of length L bits is created, to uniquely identify the video encoder.

During the video compression encoding process, one bit from the fingerprint sequence is embedded into a coded block, by forcing the parity of the total number of coded (non-zero) coefficients for the block to match the bit of the fingerprint sequence. The total number of coefficients can refer either to the AC coefficients only, or to the AC and DC coefficients. For a 0 bit, an even number of non-zero coefficients must be coded, while for a 1 bit an odd number of non-zero coefficients must be coded.

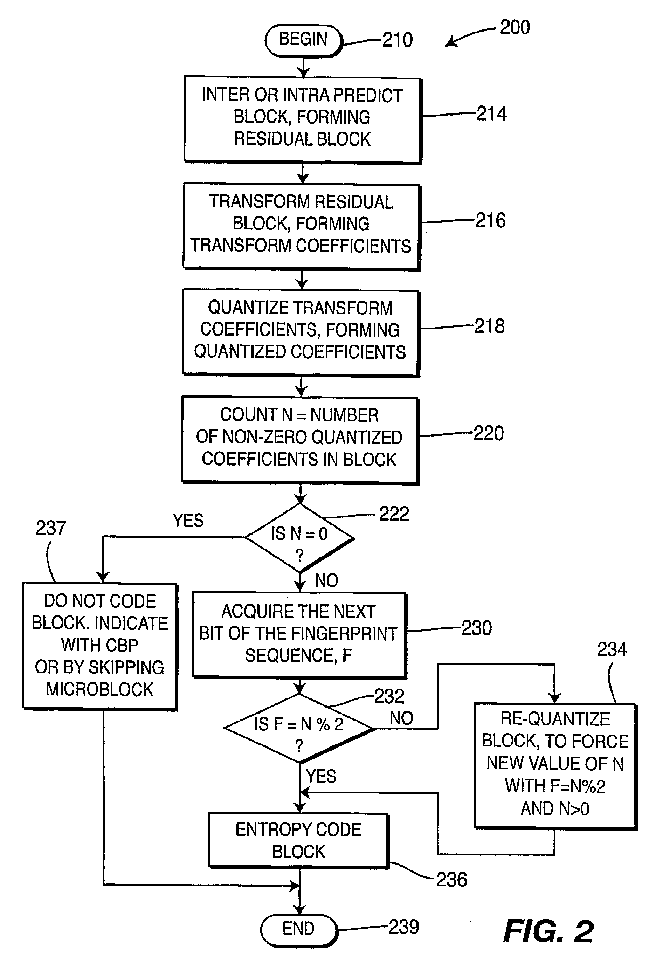

Turning to Figure 2, a block encoder with fingerprint insertion is indicated generally by the reference numeral 200. The block encoder 200 includes a begin block 210 that passes control to function block 214. The function block 214 predicts a block using Intra or Inter prediction, forming a residual block, and passes control to a function block 216. The function block 216, in turn, transforms the residual block, forming transform coefficients, and passes control to a function block 218. The function block 218 quantizes the transform coefficients, forming quantized coefficients, and passes control to a function block 220.

The function block 220, in turn, initializes a variable N to the number of non-zero quantized coefficients in the block, and passes control to a decision block 222. The decision block 222 checks whether N is zero, and if N is equal to zero, passes control to a function block 237, which does not code the block and either indicates the non-coded block with a coded block pattern (CBP) or by skipping the macroblock. The function block 237, in turn, passes control to an end block 239. If, however, N is not equal to zero, the decision block 222 passes control to a function block 230, which acquires the next bit of the fingerprint sequence F, and passes control to a decision block 232. The decision block 232 checks whether the fingerprint sequence F is equal to N modulo 2, and if F is equal to N modulo 2, passes control to a function block 236 which entropy codes the block, and then passes control to the end block 239. If, however, F is not equal to N modulo 2, the decision block 232 passes control to a function block 234, which re-quantizes the block to force a new value of N where F is equal to N modulo 2 and N is greater than zero. The function block 234, in turn, passes control to the function block 236, which is described above.

Thus, Figure 2 shows the block encoding process for block-based video encoder with fingerprint insertion. An inter or intra prediction is formed for the block, and subtracted from the block to form a residual block. The residual block is then transformed, using a block transform, to form transform coefficients. The transform coefficients are quantized, to form quantized coefficients. The number of quantized coefficients whose values are non-zero, N, are counted. If N is equal to zero, the block is not coded, and a fingerprint sequence bit is not embedded into this block. If N ≠ 0, the block is coded, and a bit F of the fingerprint sequence is to be embedded into the block. If N % 2 (where % is the modulo operator) is equal to F, no action is necessary to embed bit F into the block, and it is entropy coded. If N % 2 is not equal to F, the block is re-quantized to force a new value of N, such that N % 2 = F and N > 0.

If other blocks in the same macroblock are coded, the non-coding of a block is indicated using a coded block pattern (CBP). If all blocks in the same macroblock are not coded, the macroblock is skipped. If the block is to be coded, the non-zero coefficients are entropy coded using runlength coding.

When re-quantization of the block is necessary, an encoder may choose any method of re-quantizing the block such that the new value of N meets the conditions that N % 2 = F and N > 0. The number of non-zero coefficients in the block may be increased or decreased by one to match the fingerprint signal bit by re-quantizing the block. It is necessary that the re-quantization process not create blocks with no non-zero coefficients, as these blocks will not be coded, and hence the watermark detector would be unable to determine that this block had a fingerprint bit embedded in it. So, if the number of non-zero coefficients in a block is one, the number must be increased rather than decreased.

The value of N may be decreased by one by re-quantizing to zero a transform coefficient that had originally corresponded to a non-zero quantized coefficient. The encoder could choose the lowest value transform coefficient or highest frequency position nonzero coefficient to be re-quantized to zero, for examples, to minimize the effect on compressed video quality.

The value of N may be increased by re-quantizing a zero valued quantized coefficient to a non-zero value, for example - set to 1. The encoder may choose to re-quantize to 1 the transform coefficient in the position that is one higher frequency position in scan order to the last non-zero quantized coefficient of the first quantization stage. In the JVT compression standard, when CAVLC entropy coding is used, trailing ones are efficiently encoded, so adding a non-zero coefficient in this manner will have very little impact on the number of bits required to encode this block. The same strategy can be used with other entropy coding methods, such as CABAC.

A pattern for selecting which coded blocks to embed a fingerprint bit into is pre-determined, and used by the encoder and the fingerprint detector. The first L coded blocks may be used, to encode the L-bit sequence. Alternatively, every Mth coded block, for any pre-determined value of M, could be used to code the L-bit sequence in L * M coded blocks. Other patterns may also be used.

The L-bit fingerprint sequence can be repeated many times in the video sequence, or inserted only once. Once the entire L-bit sequence has been embedded, the fingerprint embedding process can stop until a specified restart point is reached. In a preferred embodiment, the L-bit fingerprint sequence is repeated for every Group of Pictures or IDR.

An encoder may choose to require that the entire L-bit sequence be embedded into some number of video pictures, slices or macroblocks, which corresponds to some number of blocks, B. In a preferred embodiment, the encoder requires that the entire L-bit sequence be encoded in every I picture.

Before encoding of a video picture, while it is known how many blocks the video picture is divided into, it is unknown how many of those blocks will be classified as not coded. Only blocks classified as coded are used for embedding a fingerprint bit. In order to meet the constraint that the entire L-bit fingerprint sequence be embedded into a desired number of blocks, B, the encoder can force blocks that would have originally been not-coded to be coded, so that a fingerprint bit may be embedded into that block. This is done by re-quantizing the block such that its new number of non-zero coefficients N is greater than zero.

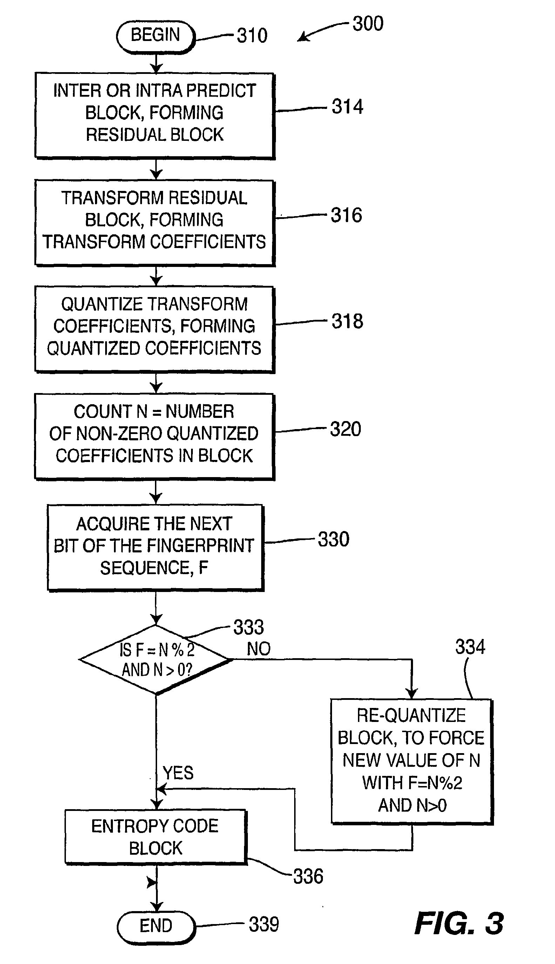

Turning now to Figure 3, a block encoder with forced fingerprint insertion is indicated generally by the reference numeral 300. The block encoder 300 includes a begin block 310 that passes control to function block 314. The function block 314 predicts a block using Intra or Inter prediction, forming a residual block, and passes control to a function block 316. The function block 316, in turn, transforms the residual block, forming transform coefficients, and passes control to a function block 318. The function block 318 quantizes the transform coefficients, forming quantized coefficients, and passes control to a function block 320.

The function block 320, in turn, initializes a variable N to the number of non-zero quantized coefficients in the block, and passes control to a function block 330, which acquires the next bit of the fingerprint sequence F, and passes control to a decision block 333. The decision block 333 checks whether the fingerprint sequence F is equal to N modulo 2 and whether N is greater than zero, and if both conditions are true, passes control to a function block 336 which entropy codes the block, and then passes control to an end block 339. If, however, F is not equal to N modulo 2 or N is not greater than zero, the decision block 333 passes control to a function block 334, which re-quantizes the block to force a new value of N where F is equal to N modulo 2 and N is greater than zero. The function block 334, in turn, passes control to the function block 336, which is described above.

Thus, Figure 3 shows a block encoder with a forced fingerprint insertion. That is, the block is not allowed to be not coded, so that it is guaranteed that the fingerprint bit is embedded in this block. The first few steps are identical to those of Figure 2. An inter or intra prediction is formed for the block, and subtracted from the block to form a residual block. The residual block is then transformed, using a block transform, to form transform coefficients. The transform coefficients are quantized, to form quantized coefficients. The number of quantized coefficients whose values are non-zero, N, are counted. The following steps differ from Figure 2. If N > 0 and F = N % 2, the block can be entropy coded. But if those conditions are not met, the block must be re-quantized so that the value of N is changed such that the conditions are met. Unlike in Figure 2, this requantization step can be required if N = 0, i.e., if after the initial quantization the block would not have been coded.

An encoder that is required to embed the entire L-bit fingerprint sequence within B blocks, can keep track of the block count, and the coded block count, cbc. Then when the number of blocks left to encode is no longer greater than the number of fingerprint bits left to embed, the encoder could force the remaining blocks be coded, i.e. not allowed to be classified as not-coded.

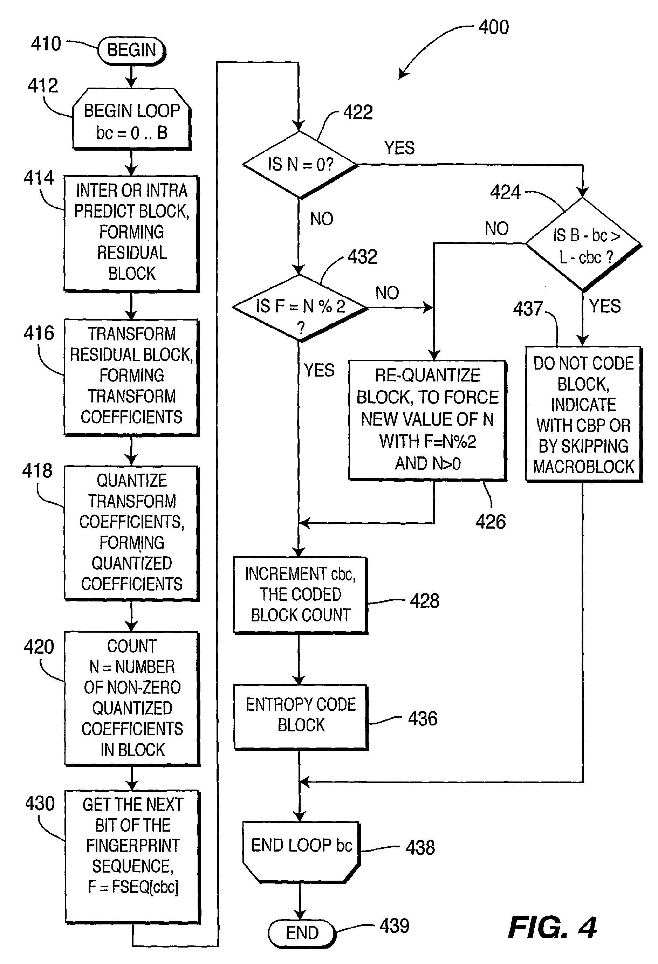

As shown in Figure 4, a block encoder with required fingerprint insertion is indicated generally by the reference numeral 400. The block encoder 400 includes a begin block 410 that passes control to a begin loop block 412, which initializes and later increments a loop counter bc between zero and a maximum value B. The begin loop block passes control to a function block 414. The function block 414 predicts a block using Intra or Inter prediction, forming a residual block, and passes control to a function block 416. The function block 416, in turn, transforms the residual block, forming transform coefficients, and passes control to a function block 418. The function block 418 quantizes the transform coefficients, forming quantized coefficients, and passes control to a function block 420.

The function block 420 initializes a variable N to the number of non-zero quantized coefficients in the block, and passes control to a function block 430. The function block 430 gets the next bit of the fingerprint sequence F = FSEQ[cbc], and passes control to a decision block 422. The decision block 422 checks whether N is zero, and if N is equal to zero, passes control to a decision block 424 which checks whether B minus bc is greater than the number of fingerprint sequence bits (L) minus the coded block count (cbc). If the comparison is true, the decision block 424 passes control to a function block 437, which does not code the block and either indicates the non-coded block with a coded block pattern (CBP) or by skipping the macroblock. The function block 437, in turn, passes control to an end loop block 438, which passes control back to the begin loop block 412 if the loop counter bc has not reached the maximum value B, or passes control to an end block 439 if the loop counter bc has reached the maximum value B. If B minus bc is not greater than L minus cbc, the decision block 424 passes control to the function block 426, which re-quantizes the block to force a new value of N where F is equal to N modulo 2 and N is greater than zero. The function block 426, in turn, passes control to a function block 428. The function block 428 increments the coded block count (cbc), and passes control to a function block 436 which entropy codes the block, and then passes control to the end loop block 438.

If, however, N is not equal to zero, the decision block 422 passes control to a decision block 432. The decision block 432 checks whether the fingerprint sequence F is equal to N modulo 2, and if F is equal to N modulo 2, passes control to the function block 428 described above. If, however, F is not equal to N modulo 2, the decision block 432 passes control to a function block 426, described previously.

Thus, Figure 4 shows an encoder with required fingerprint insertion that loops over the B blocks in a slice or frame, over which the L-bit sequence is required to be embedded. A loop counter bc is used for the block count. For each block, the initial steps are the same as in Figures 2 and 3. An inter or intra prediction is formed for the block, and subtracted from the block to form a residual block. The residual block is then transformed, using a block transform, to form transform coefficients. The transform coefficients are quantized, to form quantized coefficients. The number of non-zero quantized coefficients, N, are counted. If N = 0, a further check is made, if B - bc, which is the number of remaining blocks to be processed, is greater than the L - cbc, which is the number of remaining fingerprint sequence bits to be embedded, in which case the block is not coded. That is, if B - bc > L - cbc, the block is not coded. However, if the B - bc is not greater than L - cbc, the current block must be coded so that a fingerprint bit may be embedded, in order to meet the constraint that all L bits be embedded in the B blocks. The variable cbc is the coded block count, which tracks how many blocks have been coded, i.e., those blocks that were not classified as not coded.

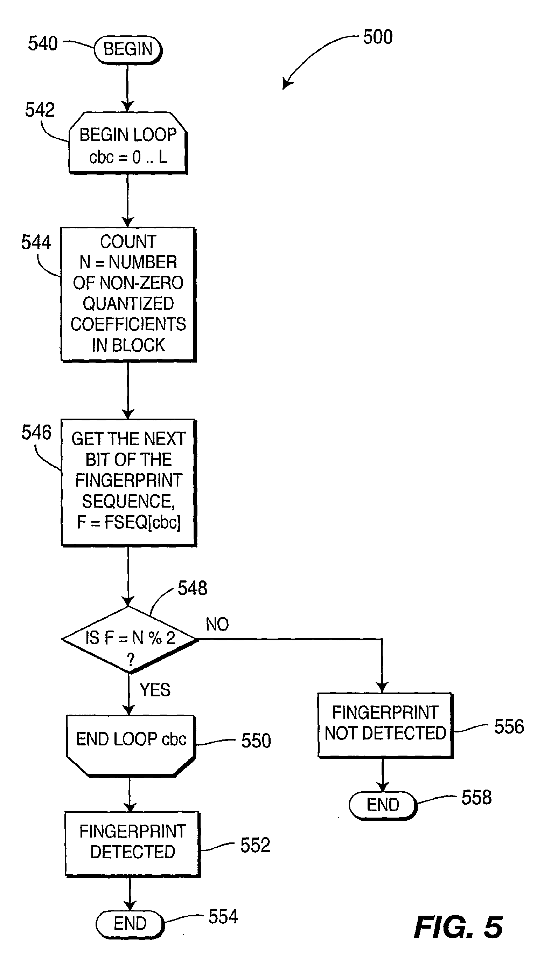

Turning to Figure 5, a fingerprint detector is indicated generally by the reference numeral 500. The fingerprint detector 500 includes a begin block 540, which passes control to a begin loop block 542. The begin loop block 542 initializes a loop variable cbc to zero, and increments it on subsequent iterations up to a maximum value of L. The begin loop block 542 passes control to a function block 544, which sets a count N equal to the number of non-zero quantized coefficients in a block, and passes control to a function block 546. The function block 546, in turn, gets the next bit of the fingerprint sequence, F=FSEQ[cbc], and passes control to a decision block 548. The decision block 548 checks whether F is equal to N modulo 2. If N is not equal to N modulo 2, the decision block 548 passes control to a function block 556, which determines that a fingerprint was not detected, and passes control to an end block 558. If, however, N is equal to N modulo 2, the decision block 548 passes control to an end loop block 550, which passes control back to the begin loop block 542 if the loop variable cbc is not yet equal to L, or otherwise passes control to a function block 552. The function block 552 determines that a fingerprint was detected, and passes control to an end block 554.

Thus, to detect the fingerprint in a compressed video bitstream, the first L coded blocks are tested to see if the embedded watermark bit matches the L-bit fingerprint sequence, FSEQ. If a pattern is used that does not embed a bit in the first-L coded blocks, such as, for example, one that operates on every Mth block, the process could be adjusted to follow that same pattern.

In the fingerprint detector embodiment of Figure 5, the first L coded blocks are looped, with cbc as the loop index. For each block, the number of non-zero quantized coefficients, N, is counted. The next bit of the fingerprint sequence, F = FSEQ[cbc], is then compared to N % 2. If F = N % 2, the loop continues. If at any point in the loop, F ≠ N % 2, the process is ended, and the fingerprint is not detected. If the loop completes with the F = N % 2 condition always being met for the L coded blocks, the process is ended and the fingerprint is detected.

If L is sufficiently large, the odds of an un-fingerprinted compressed bitstream's pattern of number of coded coefficients following the pattern of the fingerprint sequence is quite unlikely, approximately 1 in 2^L. The fingerprint detection of a single group of L coded blocks may fail if the bitstream has been changed in any way from how it was originally created, i.e. if channel errors occurred. To provide a greater degree of reliability, the fingerprint detector could check each GOP or IDR of the coded bitstream for the fingerprint.

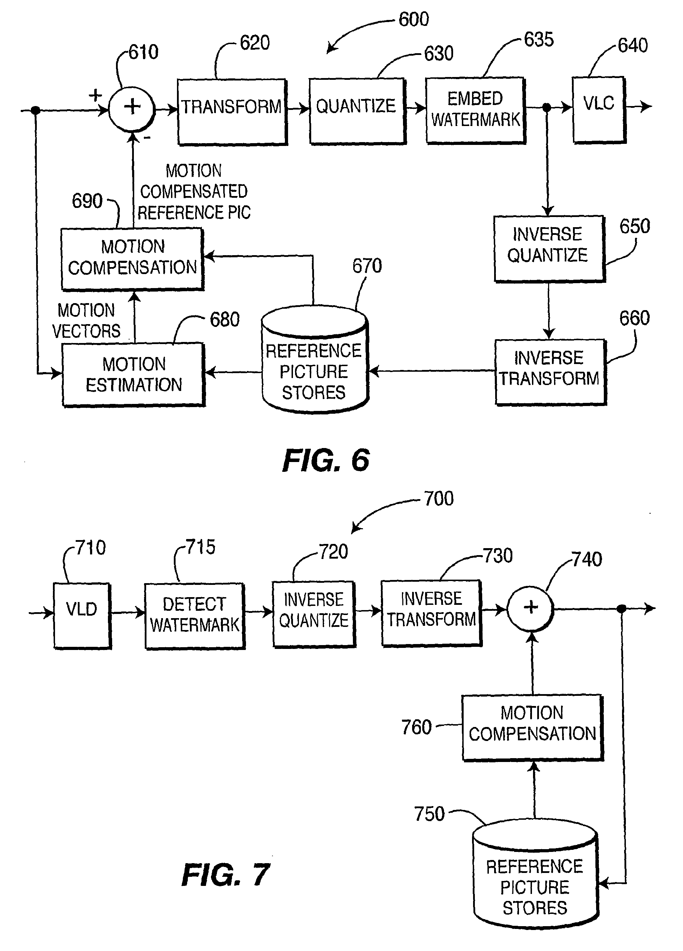

Turning to Figure 6, an exemplary video encoder for fingerprint insertion is indicated generally by the reference numeral 600. An input to the encoder 600 is connected in signal communication with a non-inverting input of a summing junction 610. The output of the summing junction 610 is connected in signal communication with a block transformer 620. The transformer 620 is connected in signal communication with a quantizer 630, alternatively embodying a block encoder for fingerprint insertion, which is connected in signal communication with a watermark embedder 635. As will be recognized by those of ordinary skill in the pertinent art based on the teachings herein, the encoder 600 need only include one of the watermark embedder 635 and the fingerprint insertion portion of the quantizer 630. The output of the embedder 635 is connected in signal communication with a VLC (variable length coder) 640, where the output of the VLC 640 is an externally available output of the encoder 600.

The output of the quantizer 630 is further connected in signal communication with an inverse quantizer 650. The inverse quantizer 650 is connected in signal communication with an inverse block transformer 660, which, in turn, is connected in signal communication with a reference picture store 670. A first output of the reference picture store 670 is connected in signal communication with a first input of a motion estimator 680. The input to the encoder 600 is further connected in signal communication with a second input of the motion estimator 680. The output of the motion estimator 680, which is indicative of motion vectors, is connected in signal communication with a first input of a motion compensator 690. A second output of the reference picture store 670 is connected in signal communication with a second input of the motion compensator 690. The output of the motion compensator 690, which is indicative of a motion compensated reference picture, is connected in signal communication with an inverting input of the summing junction 610.

As shown in Figure 7, an exemplary video decoder for fingerprint detection is indicated generally by the reference numeral 700. The video decoder 700 includes a VLD (variable length decoder) 710 connected in signal communication with a watermark detector 715, which is connected in signal communication with an inverse quantizer 720, alternatively embodying a block decoder for fingerprint detection. As will be recognized by those of ordinary skill in the pertinent art based on the teachings herein, the decoder 700 need only include one of the watermark detector 715 and the fingerprint detection portion of the inverse-quantizer 720. The inverse quantizer 720 is connected in signal communication with an inverse transformer 730. The inverse transformer 730 is connected in signal communication with a first input terminal of a summing junction 740, where the output of the summing junction 740 provides the output of the video decoder 700. The output of the summing junction 740 is connected in signal communication with a reference picture store 750. The reference picture store 750 is connected in signal communication with a motion compensator 760, which is connected in signal communication with a second input terminal of the summing junction 740.

These and other features and advantages of the present invention may be readily ascertained by one of ordinary skill in the pertinent art based on the teachings herein. It is to be understood that the principles of the present invention may be implemented in various forms of hardware, software, firmware, special purpose processors, or combinations thereof.

Most preferably, the principles of the present invention are implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

Although the illustrative embodiments have been described herein with reference to the accompanying drawings, it is to be understood that the present invention is not limited to those precise embodiments, and that various changes and modifications may be effected therein by one of ordinary skill in the pertinent art,

## Claims

1. A method (200, 300, 400) of including a digital fingerprint in a compressed video bitstream, the method comprising:
representing (230, 330, 430) a unique identification code as a sequence of bits; **characterized in that** the method further comprises:
embedding (234, 334, 434) each bit of the unique identification code into a corresponding coded block of the compressed video bitstream by matching the parity of the number of coded coefficients in the block to the bit value of the unique identification code.

2. A method as defined in Claim 1 wherein the number of coded coefficients is non-zero in each block indicative of a bit in the unique identification code.

3. A method as defined in Claim 1 wherein the length of the sequence of bits is fixed.

4. A method as defined in Claim 1 wherein the unique identification code uniquely identifies a video encoder.

5. A method as defined in Claim 1 wherein the number of coded coefficients in the block refers to the number of AC coefficients.

6. A method as defined in Claim 1 wherein an even number of non-zero coefficients for the block are coded for a 0-bit of the unique identification code, while an odd number of non-zero coefficients for the block are coded for a 1-bit of the unique identification code.

7. A method as defined in Claim 1 wherein matching the parity comprises:
checking (232, 332, 432) whether the parity of the number of non-zero coefficients for the block is the same as that of the bit of the unique identification code; and
re-quantizing (234, 334, 434) the block if the parity of the number of non-zero coefficients for the block is not the same as that of the bit of the unique identification code.

8. A method as defined in Claim 7 wherein matching the parity further comprises:
checking whether the parity of the number of non-zero coefficients for the re-quantized block is the same as that of the bit of the unique identification code; and
further re-quantizing the block if the parity of the number of non-zero coefficients for the block is not the same as that of the bit of the unique identification code.

9. A method as defined in Claim 7, further comprising assuring (222, 333, 422) that the number of non-zero coefficients for the re-quantized block is not equal to zero.

10. A method as defined in Claim 1 wherein matching the parity comprises one of increasing and decreasing by one the number of non-zero coefficients in the block to match the bit of the unique identification code.

11. A method as defined in Claim 1 wherein matching the parity comprises increasing rather than decreasing by one the number of non-zero coefficients to match the bit of the unique identification code in a block originally having only one non-zero coefficient.

12. A method as defined in Claim 1 wherein matching the parity comprises decreasing by one the number of non-zero coefficients by re-quantizing to zero a transform coefficient that had originally corresponded to an non-zero quantized coefficient.

13. A method as defined in Claim 12 wherein the transform coefficient to be re-quantized to zero is chosen from at least one of the lowest value transform coefficient and the highest frequency position non-zero coefficient, to reduce the effect on compressed video quality.

14. A method as defined in Claim 10 wherein the number of non-zero coefficients is increased by re-quantizing a zero-valid quantized coefficient to a non-zero value.

15. A method as defined in Claim 14 wherein the zero-valued quantized coefficient to be re-quantized is in the position that is one higher frequency position in scan order to the last non-zero originally quantized coefficient.

16. A method as defined in Claim 1 wherein matching the parity comprises replacing a zero-valued coefficient with a one-valued coefficient wherein the zero-valued coefficient to be replace is in the position that is one higher frequency position in scan order to the last non-zero coefficient.

17. A method as defined ini Claim 1, further comprising selecting the corresponding coded blocks of the compressed video bitstream to be embedded with a bit of the unique identification code in accordance with a selection pattern.

18. A method (300) as defined in Claim 17 wherein the selection pattern comprises every consecutive block up to the number of bits of the unique identification code.

19. A method (200) as defined in Claim 17 wherein the selection pattern comprises every block originally having at least one non-zero coefficient up-to the number of bits of the unique identification code.

20. A method (300) as defined in Claim 17 wherein the selection pattern comprises every Nth block up to the number of bits of the unique identification code.

21. A method (200) as defined in Claim 17 wherein the selection pattern comprises every Nth block originally having at least one non-zero coefficient up to the number of bits of the unique identification code.

22. A method as defined in Claim 1, further comprising including multiple copies of the digital fingerprint in the compressed video bitstream.

23. A method as defined in Claim 22 wherein a new copy of the digital fingerprint is repeated for every Group of Pictures or Independent Decoder Refresh period.

24. A method as defined in Claim 1 wherein the coded block is at least one of a block, slice, macroblock, and picture.

25. A method as defined in Claim 17 wherein the entire selection pattern is repeated within every intra-coded picture.

26. A video encoder (600) for embedding a digital fingerprint in a compressed video bitstream, the encoder **characterized in that** it comprises:
a quantization unit (630) for quantizing coefficients of the video bitstream; and
an embedding unit (635) in signal communication with the quantization unit for embedding bits of the digital fingerprint in blocks of the video bitstream as a function of the parity of the number of coded coefficients in the block.

27. A digital video disc having a watermark embedded in a compressed video bitstream , the watermark comprising:
a unique identification code represented as a plurality of bits; **characterized in that** said watermark further comprises:
a plurality of coded blocks corresponding to the plurality of bits of the unique identification code wherein each corresponding coded block of the compressed video bitstream has a parity of the number of coded coefficients in the block equal to the corresponding bit value of the unique identification code.

28. A digital video signal having a watermark embedded in a compressed video bitstream, the watermark comprising:
a unique identification code represented as a plurality of bits; **characterized in that** said watermark further comprises:
a plurality of coded blocks corresponding to the plurality of bits of the unique identification code wherein each corresponding coded block of the compressed video bitstream has a parity of the number of coded coefficients in the block equal to the corresponding bit value of the unique identification code.

## Patentansprüche

1. Verfahren (200, 300, 400) zum Einfügen eines digitalen Fingerabdrucks in einen komprimierten Video-Bitstrom, das das Darstellen (230, 330, 430) eines eindeutigen Identifikationskodes als eine Sequenz von Bits umfasst, **dadurch gekennzeichnet, dass** das Verfahren ferner umfasst:
Einbetten (234, 334, 434) jedes Bits des eindeutigen Identifikationskodes in einen entsprechenden kodierten Block des komprimierten Video-Bitstroms durch Anpassen der Parität der Zahl von kodierten Koeffizienten in dem Block an den Bitwert des eindeutigen Identifikationskodes.

2. Verfahren nach Anspruch 1, bei dem die Anzahl von kodierten Koeffizienten in jedem Block ungleich null ist, der ein Bit in dem eindeutigen Identifikationskode anzeigt.

3. Verfahren nach Anspruch 1, bei dem die Länge der Bitsequenz festgelegt ist.

4. Verfahren nach Anspruch 1, bei dem der eindeutige Identifikationskode eindeutig einen Videokodierer identifiziert.

5. Verfahren nach Anspruch 1, bei dem die Zahl von kodierten Koeffizienten in dem Block sich auf die Zahl von AC-Koeffizienten bezieht.

6. Verfahren nach Anspruch 1, bei dem eine gerade Zahl von Koeffizienten ungleich null für den Block für ein Null-Bit des eindeutigen Identifikationskodes kodiert wird, während eine ungerade Zahl von Koeffizienten ungleich null für den Block für ein 1-Bit des eindeutigen Identifikationskodes kodiert wird.

7. Verfahren nach Anspruch 1, bei dem die Anpassung der Parität umfasst:
Prüfen (232, 332, 432), ob die Parität der Zahl von Koeffizienten ungleich null für den Block dieselbe ist wie die des Bits des eindeutigen Identifikationskodes, und Re-Quantisieren (234, 334, 434) des Blocks, wenn die Zahl von Koeffizienten ungleich null für den Block nicht dieselbe ist wie die des Bits des eindeutigen Identifikationskodes.

8. Verfahren nach Anspruch 7, bei dem die Anpassung der Parität ferner umfasst:
Prüfen, ob die Parität der Zahl von Koeffizienten ungleich null für den re-quantisierten Block dieselbe ist wie die des Bits des eindeutigen Identifikationskodes; und
ferner Re-Quantisieren des Blocks, wenn die Parität der Zahl von Koeffizienten ungleich null für den Block nicht dieselbe ist wie die des Bits des eindeutigen Identifikationskodes.

9. Verfahren nach Anspruch 7, das ferner sicherstellt (222, 333, 422), dass die Zahl von Koeffizienten ungleich null für den re-quantisierten Block nicht gleich null ist.

10. Verfahren nach Anspruch 1, bei dem die Anpassung der Parität entweder die Erhöhung oder die Verminderung der Zahl von Koeffizienten ungleich null um eins in dem Block umfasst, um das Bit des eindeutigen Identifikationskodes anzupassen.

11. Verfahren nach Anspruch 1, bei dem die Anpassung der Parität eher die Erhöhung als die Verminderung der Zahl von Koeffizienten ungleich null um eins umfasst, um das Bit des eindeutigen Identifikationskodes in einem Block, der ursprünglich nur einen Koeffizienten ungleich null hat, anzupassen.

12. Verfahren nach Anspruch 1, bei dem die Anpassung der Parität die Verminderung der Zahl von Koeffizienten ungleich null um eins durch Re-Quantisieren eines Transformationskoeffizienten auf null umfasst, der ursprünglich einem ungleich null quantisierten Koeffizienten entsprach.

13. Verfahren nach Anspruch 12, bei dem der auf null zu re-quantisierende Transformationskoeffizient aus wenigstens einem der Koeffizienten gewählt wird, nämlich dem Transformationskoeffizienten mit dem niedrigsten Wert und dem Koeffizienten ungleich null mit der höchsten Frequenzposition, um die Wirkung auf komprimierte Videoqualität zu vermindern.

14. Verfahren nach Anspruch 10, bei dem die Zahl von Koeffizienten ungleich null durch Re-Quantisieren eines null-gültig quantisierten Koeffizienten auf einen Wert ungleich null erhöht wird.

15. Verfahren nach Anspruch 14, bei dem der zu re-quantisierende Koeffizient in einer Position ist, die eine höhere Frequenzposition in der Abtastreihenfolge zu dem letzten ursprünglich ungleich null quantisierten Koeffizienten ist.

16. Verfahren nach Anspruch 1, bei dem die Anpassung der Parität den Ersatz eines nullwertigen Koeffizienten durch einen einwertigen Koeffizienten umfasst, wobei der zu ersetzende nullwertige Koeffizient in der Position ist, die eine höhere Frequenzposition in der Abtastreihenfolge zu dem letzten Koeffizienten ungleich null ist.

17. Verfahren nach Anspruch 1, das ferner die Auswahl der entsprechenden kodierten Blöcke des komprimierten Bitstroms umfasst, in die ein Bit des eindeutigen Identifikationskodes gemäß einem Auswahlschema eingebettet werden soll.

18. Verfahren (300) nach Anspruch 17, bei dem das Auswahlschema alle aufeinanderfolgenden Blöcke bis hinauf zu der Anzahl von Bits des eindeutigen Identifikationskodes umfasst.

19. Verfahren (200) nach Anspruch 17, bei dem das Auswahlschema alle Blöcke umfasst, die ursprünglich wenigstens einen Koeffizienten ungleich null haben, bis hinauf zu der Zahl von Bits des eindeutigen Identifikationskodes.

20. Verfahren (300) nach Anspruch 17, bei dem das Auswahlschema jeden n-ten Block bis hinauf zur Zahl von Bits des eindeutigen Identifikationskodes umfasst.

21. Verfahren (200) nach Anspruch 17, bei dem das Auswahlschema jeden n-ten Block umfasst, der ursprünglich wenigstens Koeffizienten ungleich null hat, bis hinauf zu der Zahl von Bits des eindeutigen Identifikationskodes.

22. Verfahren nach Anspruch 1, das das Einschließen von Mehrfachkopien des digitalen Fingerabdrucks in den komprimierten Video-Bitstrom umfasst.

23. Verfahren nach Anspruch 22, bei dem eine neue Kopie des digitalen Fingerabdrucks für jede Gruppe von Bildern oder unabhängige Kodierer-Auffrischungsperioden wiederholt wird.

24. Verfahren nach Anspruch 1, bei dem der kodierte Block wenigstens von folgenden eines ist, ein Block, eine Slice, ein Makroblock oder ein Bild.

25. Verfahren nach Anspruch 17, bei dem das ganze Auswahlschema in jedem intra-kodierten Bild wiederholt wird.

26. Videokodierer (600) zum Einbetten eines digitalen Fingerabdrucks in einen komprimierten Video-Bitstrom, **dadurch gekennzeichnet, dass** der Videokodierer umfasst:
eine Quantisierungseinheit (630) zum Quantisieren von Koeffizienten des Video-Bitstroms; und
eine Einbettungseinheit (635) in Signalverbindung mit der Quantisierungseinheit zum Einbetten von Bits des digitalen Fingerabdrucks in Blöcke des Video-Bitstroms als Funktion der Parität der Zahl von kodierten Koeffizienten in dem Block.

27. Digitale Video-Disk mit einem in einen komprimierten Video-Bitstrom eingebetteten Wasserzeichen, das einen eindeutigen Identifikationskode umfasst, der als eine Mehrzahl von Bits dargestellt wird, **dadurch gekennzeichnet, dass** das Wasserzeichen ferner umfasst:
eine Mehrzahl von kodierten Blöcken, die der Mehrzahl von Bits des eindeutigen Identifikationskodes entsprechen, wobei jeder entsprechende kodierte Block des komprimierten Video-Bitstroms eine Parität der Zahl von kodierten Koeffizienten in dem Block hat, die gleich dem entsprechenden Bitwert des eindeutigen Identifikationskodes ist.

28. Digitales Videosignal mit einem in einen komprimierten Video-Bitstrom eingebetteten Wasserzeichen, das einen eindeutigen Identifikationskode umfasst, der als eine Mehrzahl von Bits dargestellt wird, **dadurch gekennzeichnet, dass** das Wasserzeichen ferner umfasst:
eine Mehrzahl von kodierten Blöcken, die der Mehrzahl von Bits des eindeutigen Identifikationskodes entsprechen, wobei jeder entsprechende kodierte Block des komprimierten Video-Bitstroms eine Parität der Zahl von kodierten Koeffizienten in dem Block hat, die gleich dem entsprechenden Bitwert des eindeutigen Identifikationskodes ist.

## Revendications

1. Procédé (200, 300, 400) d'insertion d'une empreinte digitale numérique dans un flux binaire vidéo compressé, le procédé comprenant :
une représentation (230, 330, 430) d'un code d'identification unique sous la forme d'une séquence de bits ; **caractérisé en ce que** le procédé comprend en outre :
une intégration (234, 334, 434) de chaque bit du code d'identification unique dans un bloc codé correspondant du flux binaire vidéo compressé en établissant une correspondance entre la parité du nombre de coefficients codés du bloc et la valeur binaire du code d'identification unique.

2. Procédé selon la revendication 1, dans lequel le nombre de coefficients codés est non nul dans chaque bloc indiquant un bit du code d'identification unique.

3. Procédé selon la revendication 1, dans lequel la longueur de la séquence de bits est fixe.

4. Procédé selon la revendication 1, dans lequel le code d'identification unique identifie uniquement un codeur vidéo.

5. Procédé selon la revendication 1, dans lequel le nombre de coefficients codés du bloc fait référence au nombre de coefficients AC.

6. Procédé selon la revendication 1, dans lequel un nombre pair de coefficients non nuls du bloc est codé pour un bit 0 du code d'identification unique, tandis qu'un nombre impair de coefficients non nuls du bloc est codé pour un bit 1 du code d'identification unique.

7. Procédé selon la revendication 1, dans lequel l'établissement d'une correspondance avec la parité comprend :
une vérification (232, 332, 432) si la parité du nombre de coefficients non nuls du bloc est identique à celle du bit du code d'identification unique ; et
une requantification (234,334, 434) du bloc si la parité du nombre de coefficients non nuls du bloc n'est pas identique à celle du bit du code d'identification unique.

8. Procédé selon la revendication 7, dans lequel l'établissement d'une correspondance avec la parité comprend en outre :
une vérification si la parité du nombre de coefficients non nuls du bloc requantifié est identique à celle du bit du code d'identification unique ; et
une nouvelle requantification du bloc si la parité du nombre de coefficients non nuls du bloc n'est pas identique à celle du bit du code d'identification unique.

9. Procédé selon la revendication 7, comprenant en outre une assurance (222, 333, 422) que le nombre de coefficients non nuls du bloc requantifié n'est pas égal à zéro.

10. Procédé selon la revendication 1, dans lequel l'établissement de la correspondance avec la parité comprend une augmentation ou une diminution d'une unité du nombre de coefficients non nuls du bloc afin de correspondre au bit du code d'identification unique.

11. Procédé selon la revendication 1, dans lequel l'établissement de la correspondance avec la parité comprend une augmentation plutôt qu'une diminution d'une unité du nombre de coefficients non nuls afin de correspondre au bit du code d'identification unique d'un bloc possédant initialement un coefficient non nul uniquement.

12. Procédé selon la revendication 1, dans lequel l'établissement de la correspondance avec la parité comprend une diminution d'une unité du nombre de coefficients non nuls en requantifiant sur zéro un coefficient de transformée qui correspondait initialement à un coefficient non nul quantifié.

13. Procédé selon la revendication 12, dans lequel le coefficient de transformée devant être requantifié sur zéro est choisi à partir d'au moins un parmi le coefficient de transformée à valeur la plus faible et le coefficient non nul à position de fréquence la plus élevée, afin de réduire l'effet sur la qualité de la vidéo compressée.

14. Procédé selon la revendication 10, dans lequel le nombre de coefficients non nuls est augmenté en requantifiant un coefficient quantifié à valeur nulle sur une valeur non nulle.

15. Procédé selon la revendication 14, dans lequel le coefficient quantifié à valeur nulle devant être requantifié se trouve dans la position correspondant à une position de fréquence supérieure dans l'ordre de balayage par rapport au dernier coefficient non nul quantifié initialement.

16. Procédé selon la revendication 1. dans lequel l'établissement de la correspondance avec la parité comprend le remplacement d'un coefficient à valeur nulle par un coefficient à valeur un, où le coefficient à valeur nulle devant être remplacé se trouve dans la position correspondant à une position de fréquence supérieure dans l'ordre de balayage par rapport au dernier coefficient non nul.

17. Procédé selon la revendication 1, comprenant en outre la sélection des blocs codés correspondants du flux binaire vidéo compressé devant être intégré avec un bit du code d'identification unique selon un modèle de sélection.

18. Procédé (300) selon la revendication 17, dans lequel le modèle de sélection comprend chaque bloc consécutif jusqu'au nombre de bits du code d'identification unique.

19. Procédé (200) selon la revendication 17, dans lequel le modèle de sélection comprend chaque bloc possédant initialement au moins un coefficient non nul jusqu'au nombre de bits du code d'identification unique.

20. Procédé (300) selon la revendication 17, dans lequel le modèle de sélection comprend chaque N^{ème} bloc jusqu'au nombre de bits du code d'identification unique.

21. Procédé (200) selon la revendication 17, dans lequel le modèle de sélection comprend chaque N^{ème} bloc possédant initialement au moins un coefficient non nul jusqu'au nombre de bits du code d'identification unique.

22. Procédé selon la revendication 1, comprenant en outre l'insertion de plusieurs copies de l'empreinte digitale numérique dans le flux binaire vidéo compressé.

23. Procédé selon la revendication 22, dans lequel une nouvelle copie de l'empreinte digitale numérique est répétée pour chaque groupe d'images ou période d'actualisation indépendante du décodeur.

24. Procédé selon la revendication 1, dans lequel le bloc codé constitue au moins un parmi un bloc, une section, un macrobloc et une image.

25. Procédé selon la revendication 17, dans lequel le modèle de sélection entier est répété dans chaque image codée intra.

26. Codeur vidéo (600) pour l'intégration d'une empreinte digitale numérique dans un flux binaire vidéo compressé, le codeur étant **caractérisé en ce qu'**il comprend :
une unité de quantification (630) pour la quantification de coefficients du flux binaire vidéo ; et
une unité d'intégration (635) dans la communication du signal avec l'unité de quantification, pour l'intégration de bits de l'empreinte digitale numérique dans des blocs du flux binaire vidéo en fonction de la parité du nombre de coefficients codés dans le bloc.

27. Disque vidéo numérique possédant un filigrane intégré dans un flux binaire compressé, le filigrane comprenant :
un code d'identification unique représenté sous la forme d'une pluralité de bits ; **caractérisé en ce que** ledit filigrane comprend en outre :
une pluralité de blocs codés correspondant à la pluralité de bits du code d'identification unique, où chaque bloc codé correspondant du flux binaire vidéo compressé possède une parité du nombre de coefficients codés dans le bloc égale à la valeur binaire correspondante du code d'identification unique.

28. Signal vidéo numérique possédant un filigrane intégré dans un flux binaire compressé, le filigrane comprenant :
un code d'identification unique représenté sous la forme d'une pluralité de bits ; **caractérisé en ce que** ledit filigrane comprend en outre :
une pluralité de blocs codés correspondant à la pluralité de bits du code d'identification unique, où chaque bloc codé correspondant du flux binaire vidéo compressé possède une parité du nombre de coefficients codés dans le bloc égale à la valeur binaire correspondante du code d'identification unique.
